Europäisches Patentamt

European Patent Office

Office européen des brevets

(19)

(11) Publication number: **0 147 407**
**B1**

(12) **EUROPEAN PATENT SPECIFICATION**

(45) Date of publication of patent specification: **01.06.88**

(21) Application number: **84901679.5**

(22) Date of filing: **02.04.84**

(86) International application number:
**PCT/US84/00499**

(87) International publication number:
**WO 84/04797 06.12.84 Gazette 84/28**

(51) Int. Cl.⁴: **F 22 B 35/00,** F 01 K 23/10

(54) **STEAM GENERATOR CONTROL SYSTEMS.**

(30) Priority: **23.05.83 US 497132**

(43) Date of publication of application:
**10.07.85 Bulletin 85/28**

(45) Publication of the grant of the patent:
**01.06.88 Bulletin 88/22**

(84) Designated Contracting States:
**CH DE FR GB LI SE**

(56) References cited:
**FR-A-1 288 316**
**GB-A-1 092 339**

(73) Proprietor: **SOLAR TURBINES INCORPORATED**
**2200 Pacific Highway P.O. Box 80966**
**San Diego California 92138 (US)**

(72) Inventor: **DUFFY, Thomas, E.**
**2226 Illion Street**
**San Diego, CA 92110 (US)**
Inventor: **CAMPBELL, Alan, H.**
**625 Cerro Street**
**Encinitas, CA 92024 (US)**
Inventor: **LINDSEY, O., Leon**
**4657 Terry Lane**
**La Mesa, CA 92041 (US)**

(74) Representative: **Jackson, Peter Arthur et al**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a steam generation system having a novel control system, particularly a steam generation system for unfired generators (or boilers) of the once-through type.

Conventional steam boilers have a number of economic shortcomings and cause many operating problems in combined cycle applications, particularly those of small capacity using gas turbines in the 4000—25000 Kw range. Among the major contributors to these drawbacks are the complex systems utilized to control the operation of combined cycle power plant boilers. Typical prior art control systems for combined cycle power plants are disclosed in US—A—3505811 and US—A—2965765.

The complex prior art boiler control systems tend to have large numbers of components that are subject to malfunction which makes maintenance costs high and reduces boiler availability. Also, attended operation may be required for safe and efficient boiler operation.

The present invention is directed to overcoming these problems.

GB—A—1092339 discloses a steam generation system comprising an unfired boiler; a source of thermal energy for the boiler; means for effecting a flow of feedwater to the boiler; a controller for controlling the operation of the boiler and including means operable in a predictive mode of operation for periodically calculating the energy available to the boiler from the thermal energy source and the quantity of dry steam that can be generated by the transfer of the energy to the feedwater; and means under the direction of the controller for so modulating the flow of feedwater to the boiler as to supply to the boiler the quantity of feedwater that can be turned into steam by the transfer of the thermal energy thereto. There is a need to improve the efficiency and response of such a system, and, according to the invention, such a system is characterised in that the boiler has a high pressure steam generating circuit, a low pressure steam generating circuit; in that the means for modulating the flow of feedwater to the boiler includes a feedwater flow proportioning means upstream of the high and low pressure steam generating circuits; and in that the controller has means for generating a predicted flow split signal of the predicted ratio of the flow of feedwater to the high and low pressure steam generating circuits, means for generating first and second signals indicative of the flow of the feedwater actually passed through the boiler and through the low pressure steam generating circuit, means for converting the first and second signals to an actual flow split signal in accordance with the term

$$\frac{W_{FW} - W_{LPFW}}{W_{LPFW}}$$

where $W_{FW}$ is the total measured flow of feedwater through the boiler and $W_{LPFW}$ is the measured flow of the feedwater through the low pressure steam generating circuit, means for adding the actual flow split signal to the predicted flow split signal to create a flow split error signal, and means for converting the error signal to a flow split command signal which controls the feedwater flow proportioning means.

The present invention utilizes the philosophy that an unfired boiler can be so controlled as to efficiently produce steam of acceptable quality by regulating a single operating parameter; viz., the flow of feedwater to the boiler. An energy or enthalpy balance is struck between the hot gases supplied to the boiler and steam at a specified temperature relative to the temperature of those gases (the approach temperature) because steam quality and boiler efficiency are closely related to steam temperature, and the flow of feedwater is so regulated that the steam is produced at the selected (approach setpoint) temperature. The herein disclosed boiler operation controllers are simple, reliable, inexpensive and capable of providing safe and efficient unattended boiler operation.

In the accompanying drawings:—

Figure 1 is a schematic view of a combined cycle power plant with a boiler which is adapted to be controlled in accord with the principles of the present invention;

Figure 2 is a schematic illustration of one controller which can be employed to control the operation of the boiler shown in Figure 1;

Figure 3 is a schematic illustration of a subsystem that can be added to the controller of Figure 2 to afford more accurate control over the operation of the boiler;

Figure 4 shows, graphically, the effect of different types of control on boiler operation;

Figure 5 shows, schematically, a subsystem which can be added to the controller of Figure 2 in applications involving dual pressure boilers to make the operation of the boiler more efficient; and

Figure 6 is a schematic representation of yet another subsystem that can be used in conjunction with that shown in Figure 5 to make the operation of a dual pressure boiler more efficient.

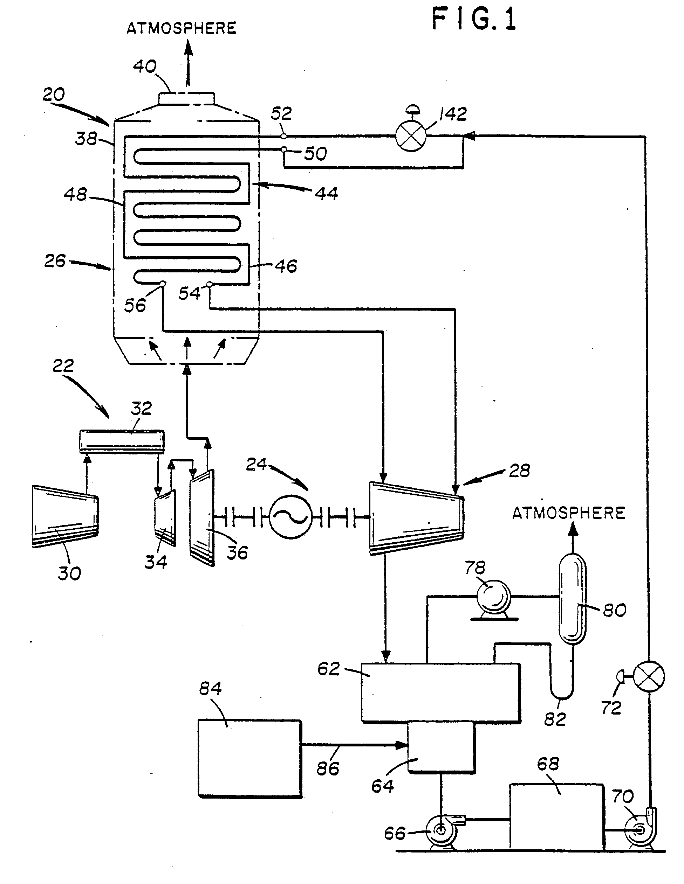

Referring now to the drawing, Figure 1 depicts a combined cycle power plant 20 which includes: a gas turbine engine 22 drive connected to an alternator 24; a boiler 26, in which steam is generated by thermal energy recovered from the hot gases exhausted from gas turbine engine 22; and a steam turbine 28 also drive connected to alternator 24 and employing the steam produced in boiler 26 as a motive fluid.

In power plant 20, steam turbine 28 also drives the exemplary load; in this example an alternator 24. However, it can equally well be employed to drive a load which is different from the load being driven by gas turbine engine 22.

For the most part, the components of power plant 20 are of conventional or otherwise familiar construction. Those components will be described herein only to the extent necessary for an understanding of the present invention.

The illustrated gas turbine engine is of conventional configuration; it includes a compressor 30, a combustor 32, a gas producer turbine 34 for driving compressor 30, and a power turbine 36. Hot gases exhausted from power turbine 36 at a temperature in the range of 427—482°C are ducted to, and flow through, the casing 38 of steam generator 26. Normally, these gases will be exhausted to atmosphere through stack 40 at a temperature of about 112°C. The heat thus recovered in steam generator 26 is 21—25% higher than can be recovered in the unfired boilers, heretofore employed in combined cycle power plants.

The boiler 26 illustrated in Figure 1 has a once-through, dual pressure configuration. It includes a steam generating module 42 which, in one actual boiler design, is made up of forty steam generating circuit assemblies each including a high pressure tube 46 and a low pressure tube 48. In each of these tubes a phase change of water to saturated steam and a change from saturated steam to superheated steam occurs in a continuous flow path extending from the inlet 50 (or 52) to the outlet 54 (or 56) of the tube as the water flows downwardly through the tube in efficient, counterflow relationship to the flow of the hot gas turbine engine exhaust gases. Thus, different regions in each tube function as a feedwater heater, as a vaporizer, and as a superheater.

High pressure steam generated in tubes 46 of boiler 26 flows into the high pressure section of dual pressure steam turbine engine 28, and low pressure steam flows into the low pressure section of the turbine.

A number of desirable attributes such as reduced maintenance and operating costs, simplification of automatic operation, and elimination of possibilities for operator error are obtained by the use of corrosion resistant materials in boiler 26, thereby eliminating the need for controlling pH and for chemically and/or mechanically controlling the dissolved oxygen content of the boiler feedwater. To this end, tubes 46 and 48 are made of such a material, typically a nickel-chromium-iron containing, high temperature and corrosion resistant alloy.

Steam exhausted from turbine 28 flows into a conventional condenser 62 where the steam is condensed. This component may be, as examples, a water or air cooled condenser of conventional design.

Condensate accumulates in hot well 64 which contains the small inventory of feedwater needed for boiler 26.

That only a small inventory of feedwater is needed to operate boiler 26 is of considerable practical importance. The large mass of saturated water contained in the drums of a conventional boiler, and eliminated in the novel boilers disclosed herein, is a safety hazard and has produced widespread legislation requiring attended operation of steam boilers. By eliminating this large mass of saturated water, the requirement for attended operation can also be eliminated. This is cost effective and, also, facilitaes remote, unattended operation of combined cycle power plant 20.

From hot well 64, the condensed steam is circulated by condensate pump 66 to a condensate polisher 68. Here, dissolved solids are removed from the condensate which is then pumped to steam generator 26 by feedwater pump 70 through a modulating type flow control valve 72. This valve is controlled by a system which matches the feedwater flow rate to the enthalpy in the hot gases supplied to the steam generator from gas turbine 22.

As indicated above, it has unexpectedly been found that the fabrication of those boiler components wetted by aqueous fluids eliminates the need for chemically removing dissolved oxygen from the feedwater supplied to boiler 26 or for controlling the pH of the feedwater. However, physical removal of dissolved gases as by hot well deaeration will typically be necessary to maintain an adequate pressure drop across the system. Hot well deaeration is effected by a vacuum pump 78 connected to hot well 64 through condenser 62. Oxygen evacuated from the hot well and condenser by the vacuum pump typically contains appreciable amounts of entrained water. Consequently, the evacuated air is pumped into a conventional separator 80. Air is discharged from separator 80 to atmosphere, and water is returned through trap 82 from separator 80 to condenser 62.

One of the important advantages of the steam generators disclosed herein is that the requirement for make-up of feedwater is nominal. For example, one boiler of the type disclosed herein is planned to produce 6,998 kilograms of steam per hour at one exemplary design point. Make-up water requirements for this boiler are less than 2.4 litres per hour. In contrast, make-up water requirements for a conventional blowdown boiler of comparable capacity are about 170 litres per hour.

Such make-up water as is required is first circulated through a demineralizer 84 to remove dissolved and suspended solids from the water and then supplied to hot well 64 through make-up water line 86.

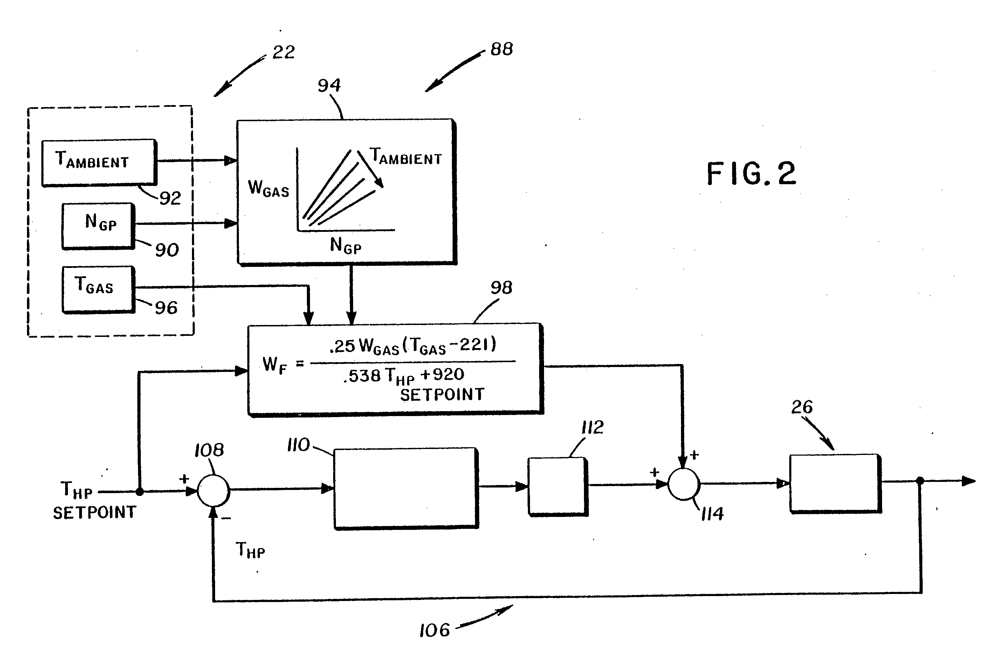

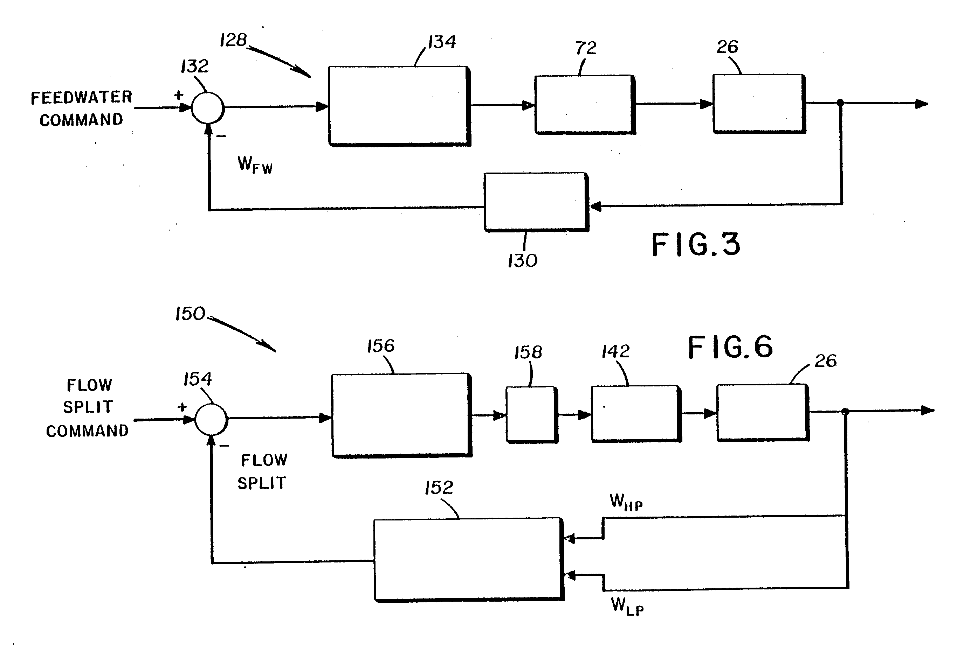

Referring still to the drawing, Figures 2 and 3 show, schematically, one flow control system (or flow controller) 88 for regulating the flow of feedwater to boiler 26 by modulating the flow of the feedwater through flow control valve 72.

Flow controller 88 employs the above-discussed strategy of recovering the maximum amount of thermal energy from the hot gases supplied to boiler 26 without adjusting the flow of fuel to or otherwise predicating the operation of gas turbine engine 22 on conditions in the boiler; that is, the operation of boiler 26 is subordinated or slaved to the operation of the gas turbine engine.

**0 147 407**

This strategy can be followed and safe, efficient operation of boiler 26 obtained in an extremely simple fashion by controlling only the flow of feedwater to the boiler, this control being so effected as to maintain only one parameter within specified limits. This parameter is the approach temperature of boiler 26 which is defined as the temperature of the hot gases supplied to the boiler minus the temperature of the high pressure steam generated in the boiler.

Controller 88 achieves this goal by calculating the energy available from the hot gases supplied to boiler 26 and the maximum amount of steam that can thereby be produced within the foregoing constraint and adjusting feedwater flow valve 72 accordingly.

The energy added to the feedwater to generate steam equals the energy recoverable from the gas turbine engine exhaust gases. Because outlets 54 and 56 (see Figure 1) are fixed restrictions, that energy balance can be approximated by:

$$(C_{PFW} \cdot \Delta T_{FW} + h_{fg})W_{FW} = W_{gas} \ C_{gas} \ \Delta T_{gas} \qquad (1)$$

where:

$C_{PFW}$ =the average specific heat of steam on the water side of the boiler at design point,

$\Delta T_{FW} = T_{out} - T_{in}$ =the increase from feedwater temperature to steam outlet temperature,

$h_{fg}$ =the latent heat of vaporization of water,

$\Delta T_{gas}$ =the change in temperature of turbine exhaust gases in the boiler,

$W_{FW}$ =the mass flow of feedwater through the boiler,

$W_{gas}$ =the mass flow of hot gas supplied to the boiler from the gas turbine engine as calculated from measured operating parameters of gas turbine engine 22, and

$C_{gas}$ =the specific heat of the hot gases supplied to the boiler.

Certain set points were established to optimize the generation of steam in the boiler 26 of combined cycle power plant 20. The first was that the temperature of the gas leaving the boiler should be 105°C. Thus, $\Delta T_{gas} = T_{gas} - 105°C$, where $T_{gas}$ is the temperature of the gas being supplied to boiler 26 and is a measured parameter. The specific heats $C_{gas}$ and $C_{PFW}$ were assigned average values of $C_{gas} = 0.0025$ and $C_{PFW} = 0.00538$. The water inlet temperature, $T_{in}$, is relatively constant and was assigned an average value of 33°C.

With the foregoing, the feedwater equation can be rewritten as follows:

$$W_{FW} = \frac{W_{gas} \cdot (T_{gas} - 105°C) \ C_{gas}}{C_{PFW} \ (T_{HP} - T_{gas}) = h_{fg}} \qquad (2)$$

The term $h_{fg}$ is relatively constant and was replaced by an assigned value. As $C_{PFW}$ and $T_{in}$ are relatively constant, values assigned to these parameters were multiplied together and added algebraically to the value assigned to $h_{fg}$. The resulting figure was 2.05.

As discussed above, the maximum amount of dry steam (within constraints) can be produced if $T_{HP}$, the outlet steam temperature, is kept within a specified number of degrees of $T_{gas}$. This difference, termed the approach temperature, $T_{APP} = T_{gas} - T_{HP}$.

The expression $(T_{HP} - T_{gas})$ is preferably replaced by one which takes the wanted approach temperature into account, and is:

$$T_{HP \ SETPOINT} = T_{gas} - \Delta T_{APP}$$

where $T_{APP}$ is an assigned value or is calculated from $T_{gas}$.

Thus with all assigned values substituted, the feedwater flow control algorithm becomes:

$$W_{FW} = \frac{0.0025 \ W_{gas} \ (T_{gas} - 105)}{0.00538 \ T_{HP \ SETPOINT} + 2.05} \qquad (3)$$

The only variables in the open loop, predictive mode of operation afforded flow controller 88 by the feedwater flow control algorithm (3) are the mass flow and temperature of the gases supplied to boiler 26.

The mass flow of exhaust gases available from turbine 22 ($W_{gas}$) is proportional to the speed of gas producer turbine 34 for any given ambient temperature of the air introduced into compressor 30.

Consequently, controller 88 is designed to convert the speed and ambient air temperature information from sensor 90 and 92 into a mass flow value. This can be done with a conventional function generator 94 designed to make the calculations shown in graphical fashion in Figure 2. The $W_{gas}$ value and the gas temperature (measured by a sensor 96 such as a thermocouple) are transmitted to calculation block 98 as is the selected value of $T_{HP \ SETPOINT}$. Calculation block 98 solves the equation or algorithm (3) discussed above, generating a feedwater flow signal $W_{FW}$. This signal is transmitted to the (typically) electropneumatic actuator (not shown) of feedwater flow valve 72 to regulate the flow of feedwater to boiler 26 in accord with the operating strategy discussed above.

4

**0 147 407**

In one exemplary controller, the input data for the feedwater flow control equation is collected at a rate of ten times per second, and $W_{FW}$ is recalculated after each update in the input data. The significant result of updating the input data and recalculating $W_{FW}$ at this frequency is that the feedwater flow rate is for all practical purposes based on a prediction rather than results at the boiler input. This is important because the transit time of the water through the boiler is measured in minutes; and, if output results were the only control factor, regulation of the feedwater flow would be based on obsolete data.

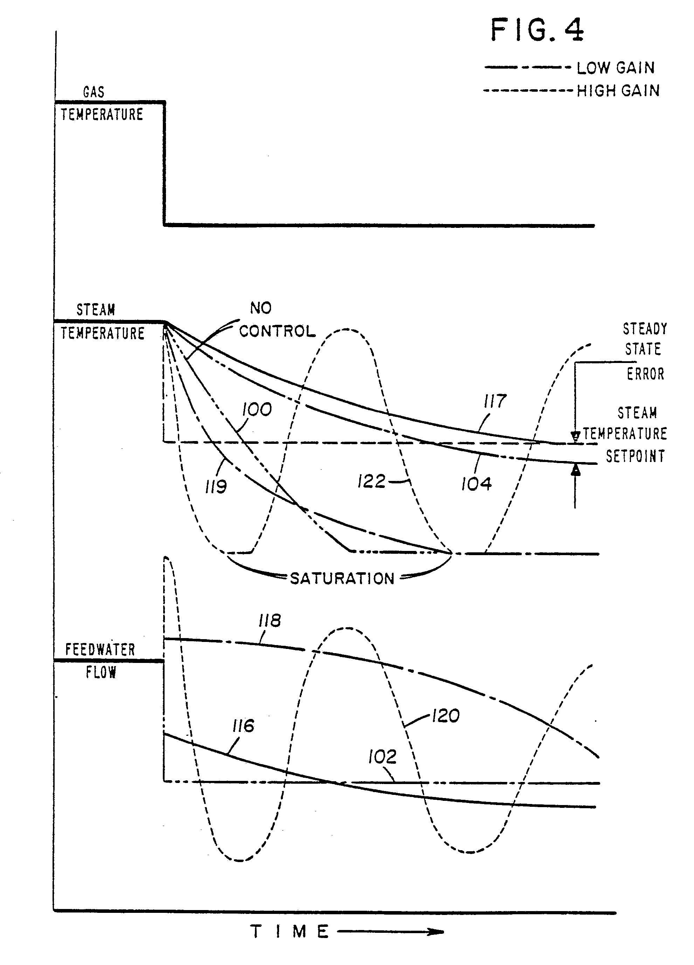

Figure 4 shows, graphically, the effect on steam temperature (and thus steam quality) of a temperature change in the hot gases supplied to boiler 26. In the case of a rapid drop in the exhaust gas temperature and no feedwater control, the steam temperature will drop; and the steam will rapidly become saturated (undesirable) as shown by curve 100.

On the other hand, if the feedwater flow is regulated by the predictive flow control equation discussed above, the feedwater flow will be decreased as the gas temperature drops as shown by curve 102. As a result, the steam temperature will stabilize at a temperature approaching the selected setpoint as shown by curve 104.

Even better control over the generation of steam in boiler 26 can be gained in some circumstances by adding to the open loop, predictive mode flow control discussed above the feedback loop 106 shown in Figure 2. Typically, this closed loop mode of control will be made operator selectable.

The closed loop, feedback mode of control is employed to compensate for inherent drifts in the predictive flow control equation (drift factors may cause significant errors in the predictive equation).

Drift may be caused by, for example, miscalibration of valve 72, fouling of steam generating tubes 46 and 48, inaccuracies in the mass flow calculation made by function generator 94, and signific variations in $T_{EX}$ from the assigned value.

In the closed loop mode of boiler control a corrected feedwater flow rate and a feedwater flow correction factor $W_{CLCF}$ are generated in accord with the equations:

$$FW_{TOTAL} = W_{FW} + W_{CLCF} \qquad (4)$$

and

$$W_{CLCF} = -[(T_{GAS} - T_{APP}) - T_{HP}] \; K_{CLCF} \qquad (5)$$

where:

$FW_{TOTAL}$ = the newly computed feedwater flow including the closed loop correction, in kg/hr,
$T_{HP}$ = the measured high pressure outlet steam temperature, and
$K_{CLCF}$ = a gain coefficient for converting temperature to feedwater flow.

The gain coefficient is assigned a value of 17.8 N/hr/°C,

$$T_{APP} = 26 \text{ if } T_{GAS} \geq 382,$$

and

$$T_{APP} = 20 - \frac{399 - T_{GAS}}{8} \text{ if } T_{GAS} < 382.$$

The reason for adopting a variable approach temperature is that a fixed approach temperature does not guarantee a sufficient margin of superheat when gas turbine engine 22 is operating under part load.

The steam output temperature, $T_{HP}$, is measured by any desired technique, for example by a thermocouple, and summed in an adder 108 with $T_{HP\ SETPOINT}$.

This produces an error signal which is converted as by a conventional PI controller 110 into a control signal compatible with that generated in function generator 98. This latter signal is inverted in inverter 112 and summed with the predictive feedwater flow ($W_{FW}$) signal in adder 114, producing the new feedwater flow command signal ($F_{W\ TOTAL}$) for operating the electropneumatic actuator of feedwater flow control valve 72.

Curve 116 in Figure 4 shows how the feedwater flow is regulated when the closed loop correction factor is used in conjunction with the predictive flow value to control valve 72. In the same Figure, curve 117 shows that this combination of predictive and closed loop modes of operation can be taken advantage of to maintain the steam output temperature at the selected setpoint.

It is of course theoretically possible to control feedwater flow solely by the use of a feedback loop as shown in Figure 2 without simultaneously employing predictive flow control. However, Figure 4 makes it clear that this will not provide the desired results; viz., the generation of dry steam and the maximum recovery of thermal energy (which requires that the steam temperature be maintained as closely as possible to the steam temperature setpoint). If the gain in the feedback control is set low, the result of a change in gas temperature as shown in Figure 4 is overdamping as indicated by curves 118 and 119, and the steam rapidly becomes saturated. On the other hand, if a high gain feedback correction signal is employed to control the feedwater flow, oscillation occurs as indicated by curves 120 and 122; and unstable, inefficient boiler operation with periodic generation of saturated steam is the result.

It is preferred that the actual feedwater flow be measured and that any differences between the measured and command values be employed to correct the feedwater flow. A subsystem for

5

accomplishing this function in controller 88 is illustrated in Figure 3 and identified by reference character 128.

In this subsystem, the flow of steam from boiler 26 is measured and converted to a measured feedwater flow rate in function generator 130. This signal is summed with the feedwater flow command signal $W_{FW}$ or $W_{FW\ TOTAL}$ in adder 132. The resulting error signal is converted to a new feedwater flow command signal in a fast response (PID) controller 134; and the new command signal is utilized to operate the electropneumatic actuator of feedwater flow control valve 72.

As discussed above, the illustrated boiler 26 is of the dual pressure type, including as it does two independent circuits composed respectively of tubes 46 and 48 in which steam is generated at high and low pressures. Optimal operation of a boiler within the principles of the present invention can be furthered by splitting the dual pressure feedwater flow between the tubes 46 and 48 in accord with a particular flow split; viz., that obtained by dividing the high pressure steam flow by the low pressure steam flow.

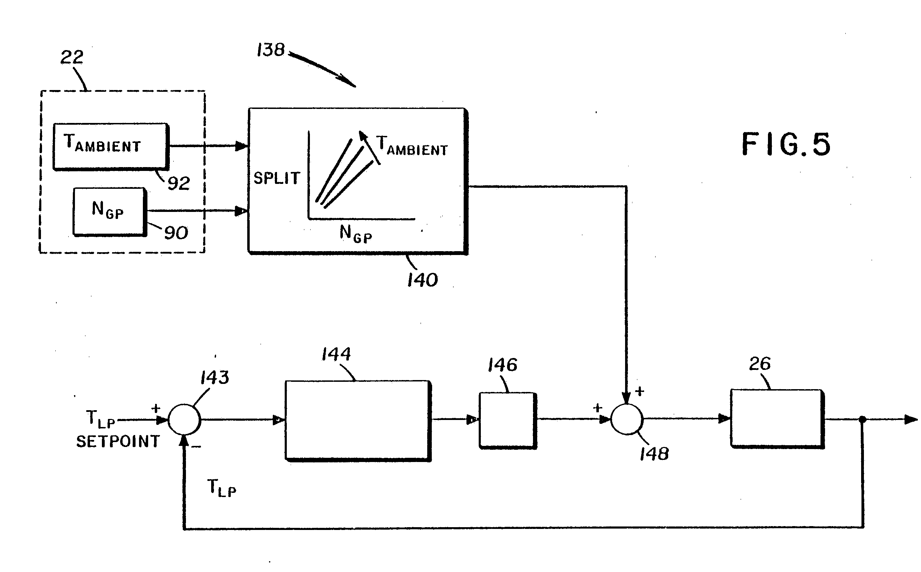

A subsystem designed to provide this additional degree of control is illustrated in Figure 5 and identified by reference character 138.

As in the case of predictive feedwater flow, the feedwater split or ratio can be determined from the ambient temperature of the air supplied to gas turbine engine compressor 30 and the speed of gas producer turbine 34. The values of these two parameters, obtained from sensors 90 and 92, are combined into a flow split signal by function generator 140 in accord with the calculations shown graphically in Figure 5. This flow split or ratio signal is applied to the operator (again typically electropneumatic) of a flow proportioning valve 142 in series with feedwater flow control valve 72 see Figure 1) to proportion the flow of feedwater between the high and low pressure steam generating tubes 46 and 48 in boiler 26. ·

Also, in the case of dual pressure boiler, boiler operation is further optimized by employing feedback to correct the feedwater flow split signal.

Specifically, as shown in Figure 5, the controller for a dual pressure boiler may have an input for a $T_{LP\ SETPOINT}$ which is analogous to, and provided for essentially the same purposes as, the $T_{HP\ SETPOINT}$ discussed above; viz., to insure an adequate degree of superheat in the low pressure steam and maximum recovery of the heat from the hot gases on which boiler 26 is operated.

In the feedback mode of operation, which again is preferably operator selectable, the temperature of the low pressure steam is measured, as by a thermocouple, and the resulting signal is summed with that representing $T_{LP\ SETPOINT}$ adder 143.

The resulting error signal is converted to a control signal in PI controller 144, and is inverted in inverter 146. This produces a signal which is combined with the feedwater flow split command signal from function generator 140 in adder 148, producing a command signal which is, again, applied to the actuator of proportioning valve 142.

Still another degree of refinement, and increase in boiler performance, can be obtained in the case of a dual pressure boiler by comparing the actual split of feedwater with the predictive flow split and adjusting flow proportioning valve 142 accordingly. This subsystem is shown in Figure 6 and identified by reference character 150.

In the illustrated subsystem, the flow of high pressure and low pressure steam from boiler 26 are measured and signals indicative of the resulting mass flows converted to a flow split value in function generator 152 in accord with the equation:

$$\text{Split} = \frac{W_{FW} - W_{LPFW} = W_{HP}}{W_{LPFW}\ W_{LP}} \quad (6)$$

where:

$W_{LPFW}$ = the low pressure steam flow, and

$W_{FW} - W_{LPFW}$ = the high pressure steam flow.

The resulting signal is summed with the flow split command signal from function generator 140 or adder 148 in adder 154, producing an error signal which is converted to a command signal in PID controller 156. That signal is inverted in inverter 158 and, as discussed previously, applied to the actuator of flow proportioning valve 142.

It is reiterated, in conjunction with the foregoing detailed description that the novel feedwater flow controllers described herein are across-the-board applicable to once through, unfired boilers. In particular, as the control strategy involves only an energy or enthalpy balance between the hot gases supplied to the boiler and steam generated in the boiler, and as the only variable inputs to the controller can be measured or calculated (gas temperature and mass flow) or can be assigned constant values, it will be readily apparent to the reader that the principles of the present invention are applicable independent of the source of the waste heat.

**Claims**

1. A steam generation system comprising an unfired boiler (26); a source of thermal energy (22) for the boiler (26); means (72) for effecting a flow of feedwater to the boiler (26); a controller (88) for controlling the operation of the boiler (26) and including means (90, 92, 96) operable in a predictive mode of operation for periodically calculating the energy available to the boiler (26) from the thermal energy source (22) and the quantity of dry steam that can be generated by the transfer of the energy to the feedwater; and means (70, 72) under the direction of the controller (88) for so modulating the flow of feedwater to the boiler (26) as to supply to the boiler (26) the quantity of feedwater that can be turned into steam by the transfer of the thermal energy thereto; characterised in that the boiler (26) has a high pressure steam generating circuit (46, 50, 54), a low pressure steam generating circuit (48, 52, 56); in that the means (70, 72) for modulating the flow of feedwater to the boiler (26) includes a feedwater flow proportioning means (142) upstream of the high and low pressure steam generating circuits (46, 50, 54; 48, 52, 56); and in that the controller (88) has means for generating a predicted flow split signal of the predicted ratio of the flow of feedwater to the high and low pressure steam generating circuits, means for generating first and second signals indicative of the flow of the feedwater actually passed through the boiler (26) and through the low pressure steam generating circuit (48, 52, 56), means (152) for converting the first and second signals to an actual flow split signal in accordance with the term

$$\frac{W_{FW} - W_{LPFW}}{W_{LPFW}}$$

where $W_{FW}$ is the total measured flow of feedwater through the boiler (26), and $W_{LPFW}$ is the measured flow of the feedwater through the low pressure steam generating circuit (48, 52, 56), means (154) for adding the actual flow split signal to the predicted flow split signal to create a flow split error signal, and means (156) for converting the error signal to a flow split command signal which controls the feedwater flow proportioning means (142).

2. A system according to Claim 1, wherein the controller (88) has means (90, 92, 94, 96) for calculating the quantity of steam having a setpoint temperature which is an assigned or calculated number of degrees lower than the temperature of the thermal energy source (22) that can be generated by the transfer of the energy to the feedwater supplied to the high pressure steam generating circuit (46, 50, 54), means for measuring the temperature of the steam discharged from the high pressure steam generating circuit (46, 50, 54) and for adding a signal representative of that temperature to a signal representative of the setpoint temperature to generate an error signal, means (110) for converting the error signal to a feedwater flow correction signal, means (112, 114) for adding the feedwater flow correction signal to a flow indicative signal generated in the predictive mode of operation to generate a corrected flow command signal, and means for transmitting the corrected flow command signal to the flow modulating means (72).

3. A system according to Claim 3, which has means for effecting a flow of hot gases from the thermal energy source to and through the boiler, the controller (88) periodically calculating the energy available to the boiler from the thermal energy source (22) and the quantity of dry steam that can be generated by transfer of the energy from the hot gases to the feedwater in accordance with the algorithm:

$$W_{FW} = \frac{W_{gas}\ C_{gas}\ \Delta T_{gas}}{(C_{PFW} \cdot \Delta T_{FW} + h_{fg})},$$

where:

$W_{FW}$ = the mass flow of feedwater through the boiler (26),

$C_{PFW}$ = the average specific heat of the steam on the water side of boiler (26) at design point,

$\Delta T_{FW} = T_{out} - T_{in}$ = increase from feedwater temperature to steam outlet temperature,

$h_{fg}$ = the latent heat of vaporization of water,

$\Delta T_{gas}$ = the change in temperature of the hot gases in the boiler (26),

$W_{gas}$ = the mass flow of hot gas as supplied to the boiler (26) from the thermal energy source, and

$C_{gas}$ = the specific heat of the hot gases supplied to the boiler (26); and

flow control means (72) for modulating the flow of feedwater to the boiler at the rate $W_{FW}$ calculated by the controller (88) and thereby supplying to the boiler (26) the quantity of feedwater that can be turned into the steam by the transfer of the thermal energy thereto from the hot gases.

4. A system according to Claim 3, wherein the algorithm is simplified to

$$W_{FW} = \frac{0.0025\ W_{gas}\ (T_{gas} - 105)}{0.00538\ T_{HP\ SETPOINT} + 2.05}$$

where:

$T_{gas}$ = the temperature of the gas supplied to the boiler, and

$T_{HP\ SETPOINT}$ = the selected temperature at which steam is to be discharged from the boiler

5. A system according to any one of Claims 2 to 4, wherein the controller (88) has means (114) for

7

adding a correction factor to the feedwater flow valve (72) $W_{FW}$ to compensate for drift in accordance with the algorithm:

$$FW_{TOTAL} = W_{FW} + W_{CLCF},$$

where:

$$W_{CLCF} = -[(T_{GAS} - T_{APP}) - T_{HP}]K_{CLCF}$$

and:

$FW_{TOTAL}$ = the newly computed feedwater flow including the correction,

$T_{HP}$ = the measured high pressure outlet steam temperature,

$T_{APP}$ = $T_{GAS} - T_{HP}$,

$T_{CLCF}$ = a gain coefficient for converting temperature to feedwater flow,

$T_{APP}$ = 26 if $T_{GAS} \geq 382$, and

$$T_{APP} = 20 - \frac{399 - T_{GAS}}{8} \text{ if } T_{GAS} < 382.$$

**Patentansprüche**

1. Dampferzeugungssystem, welches folgendes aufweist: einen Kessel (26) ohne Feuerung; eine Quelle thermischer Energie (22) für den Kessel (26); Mittel (72) zur Bewirkung eines Flusses von Speisewasser zum Kessel (26); eine Steuervorrichtung (88) zur Steuerung des Betriebs des Kessels (26) und mit Mitteln (90, 92, 96), die in einer vorhersagbaren Betriebsart betrieben werden können, um periodisch die für den Kessel (26) von der thermischen Energiequelle (22) verfügbare Energie und die Menge an Trockendampf zu berechnen, die durch Übertragung der Energie zum Speisewasser erzeugt werden kann; und Mittel (70, 72), die unter der Leitung der Steuervorrichtung (88) den Speisewasserfluß zum Kessel oder Boiler (26) derart modulieren, daß der Kessel (26) mit der Speisewassermenge versorgt wird, die durch Übertragung von thermischer Energie darauf in Dampf verwandelt werden kann, dadurch gekennzeichnet, daß der Kessel (26) einen Hochdruck-Dampferzeugungskreis (46, 50, 54) und einen Niederdruck-Dampferzeugungskreis (48, 52, 56) aufweist; daß die Mittel (70, 72) zur Modulation des Speisewasserflusses zum Kessel (26) Speisewasserflußproportioniermittel (142) stromaufwärts gegenüber den Hochdruck- und Niederdruck-Dampferzeugungskreisen (40, 50, 54; 48, 52, 56) aufweisen; und daß die Steuervorrichtung (88) folgendes aufweist: Mittel zur Erzeugung eines vorhergesagten Strömungsspaltsignals des vorhergesagten Verhältnisses aus dem Speisewasserfluß zu den Hoch- und Niederdruck-Dampferzeugungskreisen, Mittel zur Erzeugung erste und zweiter Signale, welche den Fluß des Speisewassers angeben, der tatsächlich durch den Kessel (26) und durch den Niederdruck-Dampferzeugungskreis (48, 52, 56) läuft, Mittel (152) zur Umwandlung der ersten und zweiten Signale in ein tatsächliches Strömungsspaltsignal entsprechend dem folgenden Ausdruck:

$$\frac{W_{FM} - W_{LPFW}}{W_{LPFW}},$$

wobei $W_{FW}$ der gesamte gemessene Fluß an Speisewasser durch den Kessel (26) ist und wobe $W_{LPFW}$ der gemessene Fluß von Speisewasser durch den Niederdruck-Dampferzeugungskreis (48, 52, 56) ist, Mittel (154) zum Addieren des tatsächlichen Strönungsspaltsignals zum vorhergesagten Strömungsspaltsignal zur Erzeugung eines Strömungsspaltfehlersignals, und Mittel (156) zur Umwandlung des Fehlersignals in ein Strömungsspaltbefehlssignal, welches die Speisewasserströmungs-Proportioniermittel (142) steuert.

2. System nach Anspruch 1, wobei die Steuervorrichtung (88) Mittel (90, 92, 94, 96) aufweist, um die Dampfmenge zu berechnen, die eine Einstellpunkttemperatur besitzt, die eine zugewiesene oder berechnete Anzahl von Graden niedriger liegt als die Temperatur der thermischen Energiequelle (22), die durch die Übertragung von Wärme zum Speisewasser, geliefert an den Hochdruck-Dampferzeugungskreis (46, 50, 54), erzeugt werden kann, Mittel zum Messen der Temperatur des von dem Hochdruk-Dampferzeugungskreis (46, 50, 54) abgegebenen Dampfes und zur Hinzuaddierung eines Signals repräsentativ für diese Temperatur zu einem Signal repräsentativ für die Einstellpunkttemperatur, um ein Fehlersignal zu erzeugen, Mittel (110) zur Umwandlung des Fehlersignals in ein Speisewasserfluß-Korrektursignal, Mittel (112, 114) zum Hinzuaddieren des Speisewasserfluß-Korrektursignals zu einem Strömungsanzeigesignal, erzeugt in der vorhersagenden Betriebsart, um ein korrigiertes Strömungsnals an die Strömungsmoduliermittel (72).

3. System nach Anspruch 3, mit Mitteln zur Bewirkung einer Strömung heißer Gas von der thermischen Energiequelle zu und durch den Kessel, wobei die Steuervorrichtung (88) periodisch die Energie berechnet, die für den Kessen aus der thermischen Energiequelle (22) verfügbar ist, und ferner zur Berechnung der Menge an trocknem Dampf, die erzeugt werden kann durch die Übertragung von Energie von den heißen Gasen auf das Speisewasser entsprechend dem Algorithmus:

$$W_{FW}=\frac{W_{Gas}\ C_{Gas}\ \Delta T_{Gas}}{(C_{PFW}\cdot\Delta T_{FW}+h_{fg})},$$

wobei folgendes gilt:

$W_{FW}$ = der Speisewassermassenfluß durch den Kessel (26),

$C_{PFW}$ = die durchschnittliche spezifische Wärme des Damfes auf der Wasserseite des Kessels (26) am Konstruktionspunkt,

$\Delta T_{FW}=T_{aus}-T_{ein}$=Anstieg von der Speisewassertemperatur zur Dampauslaßtemperatur,

$h_{fg}$ = latente Verdampfungswärme des Wassers,

$\Delta T_{Gas}$ = die Temperaturänderung der Heißgase im Kessel (26),

$W_{Gas}$ = der Massenfluß der heißen Gase bei Lieferung an den Kessel (26) von der thermischen Energiequelle, und

$C_{Gas}$ = die spezifische Wärme der an den Kessen (26) gelieferten Heißgase; und

Strömungssteuermittel (72) zur Modulierung des Speisewasserflusses zum Kessel mit der Rate $W_{FM}$, berechnet durch die Steuervorrichtung (88), wodurch an den Kessel (26) die Speisewassermenge geliefert wird, die in Dampf ungewandelt werden kann durch die darauf erfolgende Übertragung thermischer Energie von den Heißgasen.

4. System nach Anspruch 3, wobei der Algorithmus vereinfacht ist auf:

$$W_{FW}=\frac{0,0025W_{Gas}\ (T_{Gas}-105)}{0,00538\ T_{HP\ EINSTELLPUNKT}+2,05},$$

wobei

$T_{Gas}$ = die Temperatur des an den Kessel gelieferten Gases, und

$T_{HP\ EINSTELLPUNKT}$=die ausgewählte Temperatur, bei der Dampf vom Kessel abgegeben wird.

5. System nach einem der Ansprüche 2 bis 4, wobei die Steuervorrichtung (88) Mittel (114) aufweist, um einen Korrekturfaktor dem Speisewasserflußwert (72) $W_{FW}$ hinzuzuaddieren, um die Drift entsprechend dem folgenden Algorithmus zu kompensieren:

$$FW_{TOTAL}=W_{FW}+W_{CLCF},$$

wobei

$$W_{CLCF}=-[(T_{GAS}-T_{APP})-T_{HP}]\ K_{CLCF}$$

und wobei folgendes gilt:

$FW_{TOTAL}$ = der neuberechnete Speisewasserfluß einschließlich der Korrektur,

$T_{HP}$ = die gemessene Hochdruckauslastdampftemperatur,

$T_{APP}$ = $T_{GAS}-T_{HP}$,

$T_{CLCF}$ = ein Verstärkungs- oder Gewinnkoeffizient für die Umwandlungstemperatur zur Speisewasserströmung,

$T_{APP}$ = 26, wenn $T_{GAS}\geq382$ und

$T_{APP}$ = $20-\dfrac{399-T_{GAS}}{8}$ wenn $T_{GAS}<382$.

## Revendications

1. Système de production de vapeur comportant une chaudière sans amorçage (26); une source d'énergie thermique (22) pour la chaudière (26); des moyens (72) pour engendrer un écoulement d'eau d'alimentation envoyé à la chaudière (26); un dispositif de commande (88) servant à commander le fonctionnement de la chaudière (26) et comprenant des moyens (90, 92, 96) aptes à intervenir, selon un mode d'action prévisionnel, pour calculer périodiquement l'énergie que peut fournir à la chaudière (26) la source d'énergie thermique (22) et la quantité de vapeur sèche qui peut être produite par suite du transfert de l'énergie à l'eau d'alimentation; et des moyens (70, 72) placés sous la dépendance du dispositif de commande (88) pour moduler l'écoulement d'eau d'alimentation envoyé à la chaudière (26), de telle façon à envoyer à cette dernière la quantité d'eau d'alimentation qui peut être transformée en vapeur sous l'effet du transfert de l'énergie thermique à cette eau; caractérisé en ce que la chaudière (26) possède un circuit (46, 50, 54) de production de vapeur à haute pression, un circuit (48, 52, 56) de production de vapeur à basse pression; en ce que les moyens (70, 72) servant à moduler l'écoulement d'eau d'alimentation envoyé à la chaudière (26) comprennent des moyens (142) de dosage de l'écoulement d'eau d'alimentation, installés en amont des circuits (46, 50, 54; 52, 56) de production de vapeur à haute pression et à basse pression; et en ce que le dispositif de commande (88) comprend des moyens pour produire un signal prévu

9

de division d'écoulement, correspondant au rapport prévu de l'écoulement d'eau d'alimentation envoyé au circuit de production de vapeur à haute pression à l'écoulement d'eau d'alimentation envoyé au circuit de production de vapeur à basse pression, des moyens pour produire des premier et second signaux indicatifs des écoulements d'eau d'alimentation traversant effectivement la chaudière (26) et le circuit (48, 52, 56) de production de vapeur à basse pression, des moyens (152) pour transformer les premier et second signaux en un signal réel de division d'écoulement conformément à l'expression:

$$\frac{W_{FW}-W_{LPFW}}{W_{LPFW}}$$

dans laquelle $W_{FW}$ désigne l'écoulement total mesuré d'eau d'alimentation traversant la chaudière (26), et $W_{LPFW}$ désigne l'écoulement mesuré d'eau d'alimentation traversant le circuit (48, 52, 56) de production de vapeur à basse pression, des moyens (154) pour ajouter le signal réel de division d'écoulement au signal prévu de division d'écoulement afin d'établir un signal d'erreur de division d'écoulement, et des moyens (156) pour convertir ce signal d'erreur en un signal de commande de division d'écoulement qui commande les moyens (142) de dosage de l'écoulement d'eau d'alimentation.

2. Système selon la revendication 1, dans lequel le dispositif de commande (88) comporte des moyens (90, 92, 94, 96) pour calculer la quantité de vapeur qui possède une température de consigne inférieure, d'un certain nombre de degrés assigné ou calculé, à la température de la source d'énergie thermique (22) et qui peut être générée sous l'effet du transfert de l'énergie à l'eau d'alimentation envoyée au circuit (46, 50, 54) de production de vapeur à haute pression, des moyens pour mesurer la température de la vapeur refoulée hors du circuit (46, 50, 54) de production de vapeur à haute pression et ajouter un signal représentatif de cette température à un signal représentatif de la température de consigne, de manière à établir un signal d'erreur, des moyens (110) pour convertir le signal d'erreur en un signal de correction d'écoulement d'eau d'alimentation, des moyens (112, 114) pour ajouter le signal de correction d'écoulement d'eau d'alimentation à un signal d'indication d'écoulement, produit dans le mode d'action prévisionnel, afin de produire un signal de commande d'écoulement corrigé, et des moyens pour transmettre le signal de commande d'écoulement corrigé aux moyens (72) de modulation de l'écoulement.

3. Système selon la revendication 3, qui comporte des moyens pour engendrer un écoulement de gaz chauds à partir de la source d'énergie thermique en direction de la chaudière et à travers cette dernière, le dispositif de commande (88) calculant périodiquement l'énergie que peut fournir à la chaudière la source d'énergie thermique (22) et la quantité de vapeur sèche qui peut être produite sous l'effet du transfert de l'énergie des gaz chauds à l'eau d'alimentation, conformément à l'algorithme:

$$W_{FW}=\frac{W_{gaz}\ C_{gaz}\ \Delta T_{gaz}}{(C_{PFW}\cdot \Delta T_{FW}+h_{fg})},$$

où:

$W_{FW}$ =débit massique de l'eau d'alimentation à travers la chaudière (26),

$C_{PFW}$ =chaleur spécifique moyenne de la vapeur sur le côté, contenant l'eau, de la chaudière (26) à la température théorique,

$\Delta T_{FW}$ =$T_{out}-T_{in}$=accroissement de la température de l'eau d'alimentation jusqu'à la température de sortie de la vapeur,

$h_{fg}$ =chaleur latente de vaporisation de l'eau,

$\Delta T_{gaz}$ =variation de la température des gaz chauds dans la chaudière (26),

$W_{gaz}$ =débit massique des gaz chauds envoyés à la chaudière (26) par la source d'énergie thermique, et

$C_{gaz}$ =chaleur spécifique des gaz chauds envoyés à la chaudière (26); et

des moyens (72) de commande de l'écoulement servant à moduler l'écoulement d'eau d'alimentation en direction de la chaudière avec le débit $W_{FW}$ calculé par le dispositif de commande (88) et envoyer alors à la chaudière (26) la quantité d'eau d'alimentation qui peut être transformée en vapeur sous l'effet du transfert de l'énergie thermique des gaz chauds à cette eau.

4. Système selon la revendication 3, dans lequel l'algorithme est simplifié en:

$$W_{FW}=\frac{0,0025\ W_{gaz}\ (T_{gaz}-105)}{0,00538\ T_{HP\ CONSIGNE}+2,05}$$

où:

$T_{gaz}$ =température des gaz envoyés à la chaudière, et

$T_{HP\ CONSIGNE}$=température sélectionnée, à laquelle la vapeur doit être évacuée de la chaudière.

5. Système selon l'une quelconque des revendications 2 à 4, dans lequel le dispositif de commande (88) comporte des moyens (114) pour ajouter un facteur de correction à la valeur (72) $W_{FW}$ de l'écoulement d'eau d'alimentation pour compenser la dérive, conformément à l'algorithme:

$$FW_{TOTAL} = W_{FW} + W_{CLCF},$$

où:

$$W_{CLCF} = -[(T_{GAZ} - T_{APP}) - T_{HP}]\, K_{CLCF}$$

et:

$FW_{TOTAL}$ = écoulement d'eau d'alimentation nouvellement calculé, tenant compte de la correction,

$T_{HP}$ = température mesurée de sortie de la vapeur à haute pression

$T_{APP}$ = $T_{GAZ} - T_{HP}$,

$T_{CLCF}$ = coefficient de gain pour conversion de la température en un écoulement d'eau d'alimentation

$T_{APP}$ = 26 si $T_{GAZ} \geq 382$, et

$$T_{APP} = 20 - \frac{399 - T_{GAZ}}{8}\ \text{si}\ T_{GAZ} < 382.$$

0 147 407

FIG.1

ATMOSPHERE

FIG.2

FIG.3

FIG.6

FIG. 4

—·—·— LOW GAIN
— — — — HIGH GAIN

GAS
TEMPERATURE

STEAM
TEMPERATURE

NO
CONTROL

STEADY
STATE
ERROR

STEAM
TEMPERATURE
SETPOINT

117

100

119

122

104

SATURATION

FEEDWATER
FLOW

118

120

116

102

T I M E ⟶

4

FIG.5

138

140

SPLIT

$T_{AMBIENT}$

$N_{GP}$

22

92 $T_{AMBIENT}$

90 $N_{GP}$

146

148  +  +

26

144

143  +  −

$T_{LP}$ SETPOINT

$T_{LP}$